# NEUE EUROPÄISCHE PATENTSCHRIFT

(11) **EP 2 857 437 B2**
(45) Veröffentlichungstag und Bekanntmachung des Hinweises auf die Entscheidung über den Einspruch: **15.01.2025**
(45) Hinweis auf die Patenterteilung: 19.06.2019
(21) Anmeldenummer: 14186745.7
(22) Anmeldetag: 29.09.2014
(51) Int. Cl.: C08G 69/26, C08L 77/06

(54) **Polyamidmischung**
Polyamide mixture
Mélange de polyamide

(30) Priorität: 04.10.2013 DE 102013220135
(43) Veröffentlichungstag der Anmeldung: 08.04.2015
(73) Patentinhaber: Evonik Operations GmbH, 45128 Essen (DE)
(72) Erfinder: Hülsmann, Klaus, 45721 Haltern am See (DE); Peirick, Heinrich, 48653 Coesfeld (DE); Gruhn, Maximilian, 45770 Marl (DE); Castelli, Luca, 16125 Genova (IT)
(74) Vertreter: Evonik Patent Association

(56) Entgegenhaltungen:
- EP-A1- 0 837 087
- EP-A1- 1 595 907
- EP-A1- 2 057 015
- EP-A1- 2 608 276
- EP-A1- 2 816 072
- DE-A1- 4 310 970
- JP-B1- S 492 367
- US-A1- 2007 122 615
- US-A1- 2010 140 846
- US-A1- 2011 135 860

## Beschreibung

Gegenstand der Erfindung ist ein geformter Gegenstand, hergestellt aus einer Mischung, die ein transparentes sowie ein teilkristallines, im Reinzustand opakes Polyamid enthält. Als Blend ist eine derartige Polyamidmischung transparent; entsprechende Formmassen weisen gegenüber den Einzelkomponenten verbesserte mechanische Eigenschaften auf.

Transparente Polyamide aus Bis-(4-aminocyclohexyl)-methan (PACM) mit einem Gehalt an trans,trans-Stereoisomer von 30 bis 70 % sowie Dodecandisäure sind aus der DE 15 95 150 A1 bekannt. Entsprechende transparente Polyamide aus 35 - 60 Mol-% trans,trans-Bis-(4-aminocyclohexyl)-methan und 65 - 40 Mol-% anderen Diaminen sowie linearen aliphatischen Dicarbonsäuren werden in der EP 0 619 336 A2 beschrieben. Aus dieser Schrift geht hervor, dass derartige transparente Polyamide kristallin sind; sie besitzen daher eine gute Lösemittel- sowie Spannungsrissbeständigkeit.

Die EP 0 725 101 A1 beschreibt transparente, amorphe Polyamide, die entweder aus alkylsubstituierten cycloaliphatischen Diaminen mit 14 bis 22 C-Atomen und unverzweigten aliphatischen Dicarbonsäuren mit 8 bis 14 C-Atomen oder aus unverzweigten aliphatischen Diaminen mit 8 bis 14 C-Atomen und cycloaliphatischen Dicarbonsäuren aufgebaut sind. Es wird erwähnt, dass aus diesen Polyamiden auch Blends oder Legierungen mit aliphatischen Homopolyamiden hergestellt werden können, ohne dass hierfür irgendwelche Vorteile geltend gemacht werden. Konkrete Beispiele hierfür werden nicht offenbart. Die amorphen Polyamide dieser Schrift können nicht auf Basis von PACM aufgebaut sein.

Ähnlich ist die EP 0 837 087 A1 zu werten; die Verwendung von PACM zur Herstellung des transparenten Polyamids ist dort nicht offenbart. Es können Legierungen oder Blends mit Polyamiden wie PA11 oder PA12 hergestellt werden, die angeblich ebenfalls transparent sein sollen. Ansonsten wird über die Eigenschaften derartiger Legierungen oder Blends nichts ausgesagt. Es bleibt offen, ob solche Legierungen oder Blends überhaupt vorteilhaft sind.

In der EP 1 595 907 A1 werden transparente amorphe Polyamide auf Basis von Diaminen und Tetradecandisäure sowie deren Mischungen mit semikristallinen Polyamiden beschrieben. Als Diamin kann PACM eingesetzt werden, wobei PACM20, das 20 % trans,trans-Isomer enthält, konkret genannt wird. Die Mischung eines PACM-basierenden transparenten amorphen Polyamids mit einem semikristallinen Polyamid ist aber nicht explizit offenbart.

Die Polyamide auf Basis von PACM haben wertvolle anwendungstechnische Eigenschaften, beispielsweise sind sie bei geeigneter Zusammensetzung transparent, aber mikrokristallin und damit lösemittel- und spannungsrissbeständig; ihre mechanischen Eigenschaften, etwa die Schlagzähigkeit, sind auf hohem Niveau. Allerdings ist die Durchstoßfestigkeit noch verbesserungswürdig. Dies ist beispielsweise im Anwendungsgebiet Brillengestelle und Brillengläser von Bedeutung, insbesondere bei "Sport"- und "Defense"-Applikationen. Bei diesen Anwendungen wird das Material durch einen Ball Impact Test charakterisiert, wobei eine Kugel mit einem definierten Gewicht und einer definierten Geschwindigkeit auf ein Brillengestell bzw. ein Brillenglas geschossen wird. Ein Nachteil dieser Polyamide ist auch die hohe Schmelzeviskosität unter Verarbeitungsbedingungen, die es schwierig macht, filigrane Bauteile herzustellen. Man kann zwar die Schmelzeviskosität durch Verwendung des entsprechenden Polyamids mit niedrigerem Molekulargewicht erniedrigen, jedoch leiden hierunter die mechanischen Eigenschaften, insbesondere die Schlagzähigkeit und die Durchstoßfestigkeit, erheblich. Ein niedrigeres Molekulargewicht führt auch zu einer geringeren Bruchdehnung, einer hohen Kerbempfindlichkeit und einer geringeren Alterungsbeständigkeit bei Einwirken von Hitze oder Feuchtigkeit auf die Formteile.

Die Aufgabe der Erfindung besteht darin, die Verarbeitbarkeit dieser Polyamide zu verbessern, ohne die Transparenz, die Lösemittel- und Spannungsrissbeständigkeit sowie die mechanischen Eigenschaften nennenswert zu beeinträchtigen. Ein anderer Aspekt der Aufgabe besteht darin, die Durchstoßfestigkeit, die Bruchfestigkeit, die Kerbempfindlichkeit und das Alterungsverhalten entsprechender Formteile zu verbessern, ohne die Transparenz sowie die Lösemittel- und Spannungsrissbeständigkeit zu verschlechtern.

Beansprucht wird ein geformter Gegenstand, hergestellt aus einer Mischung, die zu mindestens 50 Gew.-%, vorzugsweise zu mindestens 60 Gew.-%, besonders bevorzugt zu mindestens 70 Gew.-%, insbesondere bevorzugt zu mindestens 80 Gew.-% und ganz besonders bevorzugt zu mindestens 90 Gew.-% bzw. zu mindestens 95 Gew.-% aus einem Polyamidanteil besteht, der aus a) 70 bis 95 Gew.-Teilen, vorzugsweise 70 bis 92 Gew.-Teilen, besonders bevorzugt 70 bis 90 Gew.-Teilen, insbesondere bevorzugt 70 bis 88 Gew.-Teilen und ganz besonders bevorzugt 75 bis 88 Gew.-Teilen PA PACMX (mit X = 8 bis 12) sowie b) 30 bis 5 Gew.-Teilen, vorzugsweise 30 bis 8 Gew.-Teilen, besonders bevorzugt 30 bis 10 Gew.-Teilen, insbesondere bevorzugt 30 bis 12 Gew.-Teilen und ganz besonders bevorzugt 25 bis 12 Gew.-Teilen eines linearen aliphatischen Polyamids mit im Mittel 8 bis 12 C-Atomen in den Monomereinheiten besteht, wobei die Summe der Gew.-Teile 100 beträgt, wobei das PA PACMX ein Polyamid aus Monomereinheiten ist, die sich von Bis-(4-aminocyclohexyl)-methan (PACM) und einer linearen Dicarbonsäure herleiten, welche ausgewählt ist aus der Gruppe Octandisäure, Nonandisäure, Decandisäure, Undecandisäure, Dodecandisäure.

Der Begriff Mischung ist allgemein zu verstehen. Es kann sich beispielsweise um eine Granulatmischung handeln, bei der die Komponenten gemäß a) und b) jeweils als Granulat zusammengegeben und mechanisch - als Feststoffmischung -vermischt werden. Das Granulat kann hierbei neben der Komponente gemäß a) bzw. b) auch weitere Zusätze enthalten, die untenstehend näher beschrieben werden. Die Granulatmischung kann durch Aufschmelzen, Mischen und Formgeben zu einem Formteil verarbeitet werden. Hierbei empfiehlt es sich, die Schmelze gründlich zu mischen, um ein homogenes Formteil zu erhalten. Geeignete Mischaggregate sind Kneter oder Extruder; die Verarbeitung zum Formteil kann beispielsweise durch Spritzgießen, Extrudieren, Pressen oder Walzen erfolgen.

Die Mischung kann entsprechend auch eine Pulvermischung sein, bei der die Komponenten gemäß a) bzw. b) jeweils als Pulver zusammengegeben und mechanisch vermischt werden. Das Pulver kann hierbei neben der Komponente gemäß a) bzw. b) auch weitere Zusätze enthalten, die untenstehend näher beschrieben werden. Die Pulvermischung kann durch Aufschmelzen, Mischen und Formgeben zu einem Formteil verarbeitet werden. Auch hier empfiehlt es sich, die Schmelze gründlich zu mischen, um ein homogenes Formteil zu erhalten.

Ein Vorteil einer solchen Granulat- oder Pulvermischung ist, dass das Umschmelzen zu einem Blend entfallen kann, wodurch Energie- und Prozesskosten eingespart werden. Dies ist besonders bei der Herstellung von Kleinserien vorteilhaft.

Die Mischung kann darüber hinaus auch ein Blend sein, das durch Schmelzemischen, Austragen und Zerkleinern hergestellt wurde. Der Begriff Blend schließt hier mehrphasige Mischungen ein, bei denen die einzelnen Komponenten in Form von Domänen vorliegen, als auch Mischungen, bei denen die Verträglichkeit der einzelnen Komponenten so hoch ist, dass diese im molekularen Maßstab gemischt sind. Synonym hierzu wird häufig auch der Begriff Legierung verwendet. Das Schmelzemischen erfolgt gemäß dem Stand der Technik in einem knetenden Aggregat, das Austragen in der Regel als Strang und das Zerkleinern in der Regel mittels Granulieren, Schroten oder Mahlen. Das Blend kann hierbei neben den Komponenten a) und b) auch weitere Zusätze enthalten, die untenstehend näher beschrieben werden; in dieser allgemeinen Form wird es im Folgenden auch als Formmasse bezeichnet. Die Formmasse kann beispielsweise als Granulat, Schrot oder Pulver vorliegen. Sie kann durch Aufschmelzen und Formgeben mittels dem Fachmann bekannter Verfahren zu einem geformten Gegenstand verarbeitet werden.

Gegenstand der Erfindung sind auch geformten Gegenstände wie Formteile, Folien, Borsten oder Fasern.

Die hier verwendete Nomenklatur der Polyamide entspricht der EN ISO 1874-1. Demnach bezeichnet PA PACMX ein Polyamid aus Monomereinheiten, die sich von Bis-(4-aminocyclohexyl)-methan (PACM) und einer linearen Dicarbonsäure mit X C-Atomen herleiten. Dies können erfindungsgemäß folgende Dicarbonsäuren sein:
X = 8: Octandisäure (Korksäure)
X = 9: Nonandisäure (Azelainsäure)
X = 10: Decandisäure (Sebacinsäure)
X = 11: Undecandisäure
X = 12: Dodecandisäure

In einer bevorzugten Ausführungsform ist X geradzahlig; in einer weiteren Ausführungsform beträgt X besonders bevorzugt 10 bis 12.

Üblicherweise wird das PA PACMX aus PACM sowie der Dicarbonsäure durch Polykondensation in der Schmelze nach bekannten Verfahren hergestellt. Man kann jedoch auch Derivate hiervon einsetzen, beispielsweise das Diisocyanat, das sich von PACM herleitet, oder einen Dicarbonsäurediester.

PACM liegt als Gemisch aus cis,cis-, cis,trans- und trans,trans-Isomer vor. Es ist mit unterschiedlichen Isomerenverhältnissen kommerziell erhältlich. In einer bevorzugten Ausführungsform beträgt der Gehalt des PACM bzw. des eingesetzten Derivates hiervon an trans,trans-Isomer 30 bis 70 % und besonders bevorzugt 35 bis 65 %.

In einer weiteren bevorzugten Ausführungsform ist das PA PACMX mikrokristallin mit einer Schmelzenthalpie, gemessen gemäß ISO 11357 beim 2. Aufheizen und einer Aufheiz- und Abkühlrate von 20 °C/min, von 5 bis 40 J/g und besonders bevorzugt von 8 bis 35 J/g.

Weiterhin ist bevorzugt, dass das PA PACMX transparent ist mit einer Transmission von mindestens 85 % und besonders bevorzugt von mindestens 90 % und mit einem Haze von kleiner als 3 % und besonders bevorzugt von kleiner als 2 %, beides an spritzgegossenen Prüfkörpern mit einer Dicke von 2 mm gemäß ASTM D1003 bestimmt.

Das lineare aliphatische Polyamid gemäß b) besitzt im Mittel der einzelnen Monomereinheiten 8 bis 12 C-Atome. Es ist herstellbar aus einer Kombination von Diamin und Dicarbonsäure, aus einer ω-Aminocarbonsäure und/oder dem entsprechenden Lactam. Die fraglichen Monomereinheiten sind somit die Einheiten, die sich von Lactam, ω-Aminocarbonsäure, Diamin bzw. Dicarbonsäure herleiten. Beispielsweise sind folgende Polyamide geeignet:

| | |
|---|---|
| - Mittel 8 C-Atome: | PA88, PA79, PA97, PA610, PA106 |
| - Mittel 8,5 C-Atome: | PA89, PA98, PA611, PA116, PA512 |
| - Mittel 9 C-Atome: | PA99, PA810, PA108, PA612, PA126 |
| - Mittel 9,5 C-Atome: | PA910, PA109, PA811, PA118, PA613, PA136, PA514 |
| - Mittel 10 C-Atome: | PA10, PA1010, PA812, PA128, PA614, PA146 |
| - Mittel 10,5 C-Atome: | PA1011, PA813, PA138, PA516 |
| - Mittel 11 C-Atome: | PA11, PA1012, PA1210, PA913, PA139, PA814, PA148, PA616 |
| - Mittel 11,5 C-Atome: | PA1112, PA1211, PA1013, PA1310, PA914, PA149, PA815, PA617, PA518 |
| - Mittel 12 C-Atome: | PA12, PA1212, PA1113, PA1014, PA1410, PA816, PA618 |

Als Polyamid geeignet sind auch Copolyamide, die anhand geeigneter Comonomerenauswahl die Bedingung erfüllen, dass die Monomereinheiten im Mittel 8 bis 12 C-Atome enthalten, beispielsweise das Copolyamid aus Laurinlactam, Decandiamin und Dodecandisäure (co-PA12/1012).

Selbstverständlich können als Komponente gemäß b) auch Mischungen entsprechender Polyamide eingesetzt werden, wobei eine ausreichende Verträglichkeit miteinander vorteilhaft ist.

In einer bevorzugten Ausführungsform ist das lineare aliphatische Polyamid gemäß b) teilkristallin mit einer Schmelzenthalpie, gemessen gemäß ISO 11357 beim 2. Aufheizen und einer Aufheiz- und Abkühlrate von 20 °C/min, von mindestens 20 J/g, besonders bevorzugt von mindestens 25 J/g und insbesondere bevorzugt von mindestens 30 J/g.

Das lineare aliphatische Polyamid gemäß b) besitzt vorzugsweise eine relative Lösungsviskosität ηᵣₑₗ von 1,3 bis 2,4, besonders bevorzugt von 1,4 bis 2,2 und insbesondere bevorzugt von 1,5 bis 2,1. ηᵣₑₗ wird hierbei in einer 0,5 gew.-%igen Lösung in m-Kresol bei 23 °C gemäß ISO 307 bestimmt. Wenn eine besonders gute Fließfähigkeit der Schmelze erzielt werden soll, wird vorteilhafterweise ein lineares aliphatisches Polyamid mit einer niedrigen relativen Lösungsviskosität ηᵣₑₗ eingesetzt, beispielsweise im Bereich von 1,3 bis 1,9, vorzugsweise im Bereich von 1,3 bis 1,8 und besonders bevorzugt im Bereich von 1,3 bis 1,7.

In einer Ausführungsform ist das PA PACMX ein Polyamid aus Monomereinheiten, die sich von PACM und Octandisäure herleiten und das lineare aliphatische Polyamid gemäß b) eines der oben beschriebenen.

In einer weiteren Ausführungsform ist das PA PACMX ein Polyamid aus Monomereinheiten, die sich von PACM und Nonandisäure herleiten und das lineare aliphatische Polyamid gemäß b) eines der oben beschriebenen.

In einer weiteren Ausführungsform ist das PA PACMX ein Polyamid aus Monomereinheiten, die sich von PACM und Decandisäure herleiten und das lineare aliphatische Polyamid gemäß b) eines der oben beschriebenen.

In einer weiteren Ausführungsform ist das PA PACMX ein Polyamid aus Monomereinheiten, die sich von PACM und Undecandisäure herleiten und das lineare aliphatische Polyamid gemäß b) eines der oben beschriebenen.

In einer weiteren Ausführungsform ist das PA PACMX ein Polyamid aus Monomereinheiten, die sich von PACM und Dodecandisäure herleiten und das lineare aliphatische Polyamid gemäß b) eines der oben beschriebenen.

Die Mischung kann neben dem Polyamidanteil aus den Komponenten gemäß a) und b) weitere Bestandteile enthalten, die vorzugsweise so gewählt werden, dass sie die Transparenz nicht oder nur möglichst wenig beeinträchtigen, beispielsweise Flammschutzmittel, Stabilisatoren, Weichmacher, Glasfasern, Füllstoffe, Antistatika, Farbstoffe, Pigmente, Entformungsmittel, Fließmittel, Verträglichkeitsvermittler oder Schlagzähmodifikatoren. Die Menge dieser weiteren Bestandteile beträgt insgesamt maximal 50 Gew.-%, bevorzugt maximal 40 Gew.-%, besonders bevorzugt maximal 30 Gew.-%, insbesondere bevorzugt maximal 20 Gew.-% und ganz besonders bevorzugt maximal 10 Gew.-% bzw. maximal 5 Gew.-%.

Im Polyamidanteil der Mischung sind die Komponenten gemäß a) und b) in der Regel ausreichend miteinander verträglich, so dass kein Verträglichkeitsvermittler zugesetzt werden muss. Bei nicht ausreichender Verträglichkeit empfiehlt es sich jedoch, einen Verträglichkeitsvermittler zuzusetzen. Dieser soll vorzugsweise so gewählt werden, dass er die Transparenz nicht beeinträchtigt. Bei Einsatz eines Verträglichkeitsvermittlers liegt sein Anteil an der gesamten Mischung vorzugsweise bei 0,1 bis 10 Gew.-%, besonders bevorzugt bei 0,3 bis 8 Gew.-% und ganz besonders bevorzugt bei 0,5 bis 6 Gew.-%.

Geeignete Verträglichkeitsvermittler können beispielsweise ausgewählt werden aus Polyamin-Polyamid-Pfropfcopolymeren, Copolymeren, die Säureanhydridgruppen enthalten, Copolymeren, die Epoxidgruppen enthalten und Copolymeren, die Oxazolingruppen enthalten.

Polyamin-Polyamid-Pfropfcopolymere können unter Verwendung folgender Monomere hergestellt werden
a) 0,5 bis 25 Gew.-%, bevorzugt 1 bis 20 Gew.-% und besonders bevorzugt 1,5 bis 16 Gew.-%, bezogen auf das Pfropfcopolymer, eines verzweigten Polyamins mit mindestens 4, bevorzugt mindestens 8 und besonders bevorzugt mindestens 11 Stickstoffatomen und einem zahlenmittleren Molekulargewicht Mₙ von mindestens 146 g/mol und bevorzugt von mindestens 500 g/mol sowie
b) 99,5 bis 75 Gew.-% polyamidbildende Monomere, ausgewählt aus Lactamen, ω-Aminocarbonsäuren und/oder äquimolaren Kombinationen von Diamin und Dicarbonsäure.

Diese Pfropfcopolymeren sind in der EP 1 120 443 A2 ausführlich beschrieben; der diesbezügliche Offenbarungsgehalt dieser Schrift gehört zum Gegenstand der vorliegenden Erfindung. Ein besonderer Vorteil dieser Pfropfcopolymeren liegt darin begründet, dass sie die Transparenz nicht beeinträchtigen und die Fließfähigkeit verbessern. Abgesehen von diesen eventuell vorhandenen Pfropfcopolymeren enthält die Mischung vorzugsweise keine Polyamide als weitere Bestandteile.

Copolymere, die Säureanhydridgruppen, Epoxidgruppen oder Oxazolingruppen enthalten, sind in der WO 2008/025729 ausführlich beschrieben; sie werden dort als Haftvermittler verwendet. Der Offenbarungsgehalt dieser Schrift bezüglich der Copolymere gehört zum Gegenstand der vorliegenden Erfindung. Es ist zu beachten, dass diese Copolymere als Vernetzer wirken können; sie erhöhen die Schmelzeviskosität bei der Compoundierung bzw. der Verarbeitung. Sie können darüber hinaus die Transparenz beeinträchtigen.

Abgesehen von diesen eventuell vorhandenen polymeren Verträglichkeitsvermittlern enthält die Mischung vorzugsweise keine Polymeren als weitere Bestandteile. Darüber hinaus können als Verträglichkeitsvermittler auch Epoxidharze oder Bis- bzw. Polyoxazoline eingesetzt werden. Auch hier ist mit einer Erhöhung der Schmelzeviskosität bei der Compoundierung bzw. der Verarbeitung zu rechnen.

In den Fällen, in denen eine nicht ausreichende Verträglichkeit der Komponenten gemäß a) und b) vorliegt, man aber keinen Verträglichkeitsvermittler einsetzen möchte, kann man auf bekannte Weise durch Amidierungsreaktionen in der Schmelze Blockcopolyamide erzeugen, die eine Verträglichkeit bewirken. Dem Fachmann stehen hier beispielsweise, unabhängig voneinander oder in Kombination, folgende Maßnahmen zur Verfügung:
- Das Polyamid der Komponente gemäß a) und/oder das Polyamid der Komponente gemäß b) enthält einen Polykondensationskatalysator, üblicherweise eine phosphorhaltige Säure;
- bei den Polyamiden der Komponenten gemäß a) und b) überwiegen jeweils komplementäre Endgruppen. Das bedeutet, dass das eine Polyamid einen Überschuss an Carboxylendgruppen und das andere Polyamid einen Überschuss an Aminoendgruppen besitzt;
- die Compoundierung bzw. die Verarbeitung wird im oberen zur Verfügung stehenden Temperaturbereich durchgeführt, beispielsweise bei etwa 290 bis 320 °C.

Vorzugsweise ist die erfindungsgemäße Mischung nach Mischen in der Schmelze transparent mit einer Transmission von mindestens 85 % und besonders bevorzugt von mindestens 90 % und mit einem Haze von kleiner als 3 % und besonders bevorzugt von kleiner als 2 %, beides an spritzgegossenen Prüfkörpern mit einer Dicke von 2 mm gemäß ASTM D1003 bestimmt.

Die erfindungsgemäßen geformten Gegenstände zeichnen sich insbesondere durch die Kombination von hoher Transparenz, hoher Zähigkeit und hoher Chemikalien-, Lösemittel- und Spannungsrissbeständigkeit aus. Mögliche Anwendungsgebiete sind beispielsweise Brillengestelle oder Brillengläser, daneben auch Bauteile, bei denen eine hohe dynamische Belastbarkeit gefordert ist. Durch die Verwendung der erfindungsgemäßen Mischung kann hier die Lebensdauer erhöht werden. Dies ist unter anderem für Komponenten von Sportschuhen wie zum Beispiel Schuhsohlen sehr interessant.

Darüber hinaus ermöglicht die Erfindung, qualitativ hochwertigere Folien herzustellen, beispielsweise für Oberbeläge von Sportartikeln wie z. B. Skiern oder Snowboards. Dies zeigt sich beispielweise in einer höheren Reißdehnung bzw. Durchstoßfestigkeit und gesteigerten Fähigkeit zur Selbstheilung des Materials.

Die Erfindung wird im Folgenden beispielhaft erläutert.

In den Beispielen wurden folgende Materialien eingesetzt:

| | |
|---|---|
| PA PACM12: | mikrokristallines Polyamid, hergestellt aus Bis-(4-aminocyclohexyl)-methan mit einem Gehalt an trans,trans-Stereoisomer von 48 % sowie Dodecandisäure; ηᵣₑₗ = 1,8 |
| PA 12 Typ 1: | VESTAMID^{®} L1600, ein Basispolyamid mit ηᵣₑₗ = 1,6 |
| PA 12 Typ 2: | VESTAMID^{®} X1852, ein Basispolyamid mit ηᵣₑₗ = 2,2 |

### Referenz 1 und 2 sowie Beispiele 1 bis 5:

Die in der Tabelle 1 angegebenen Materialien wurden in einem knetenden Aggregat bei 270 °C in der Schmelze gemischt, als Strang extrudiert, granuliert und getrocknet. Die Blends wurden dann auf einer Spritzgießmaschine zu Prüfkörpern verarbeitet (Massetemperatur 280 °C, Formtemperatur 80 °C). Die Ergebnisse sind in der Tabelle 1 wiedergegeben.

Bei Referenz 1 und Referenz 2 wurden als Vergleichsbasis die beiden Ausgangsmaterialien PA PACM12 beziehungsweise VESTAMID L1600 direkt zu Prüfkörpern verarbeitet. Weiterhin sind Beispiele 4 und 5 Vergleichsbeispiele.

### Beispiel 6:

80 Gew.-Teile PA PACM 12 und 20 Gew.-Teile PA12 Typ 2 wurden als Granulat zu einer Feststoffmischung vorgemischt und auf einer Spritzgießmaschine zu Formteilen verarbeitet (Massetemperatur 280 °C; Formtemperatur 80 °C). Die Ergebnisse sind in der Tabelle 1 wiedergegeben.

Aus der Tabelle 1 geht hervor, dass beim Beispiel 2 mit der Zusammensetzung 80:20 die beste Kombination von Bruchspannung und Kerbschlagzähigkeit vorliegt; zur erfinderischen Grenze hin (70:30) werden beide Werte allmählich schlechter. Im DSC ist bei diesem Beispiel beim 2. Aufheizen ein Glasübergangspunkt bei 109,1 °C sowie ein breiter Schmelzpeak mit einem Maximum bei 238,8 °C und einem kleinen Sattel bei 252,8 °C zu erkennen. Dies deutet darauf hin, dass keine einzelnen Phasen der beiden Komponenten vorliegen, sondern eine Mischphase und dass PA PACM12 und PA12 cokristallisieren.

Sowohl die aus der Schmelzemischung hergestellten als auch die aus der Feststoffmischung hergestellten Formteile zeigen - im Vergleich zum verwendeten PA PACM12 - eine unvermindert hohe Transparenz sowie einen unverändert niedrigen Haze.

**Tabelle 1: Zusammensetzungen und Prüfergebnisse**

| Eigenschaften | Methode | Einheit | Referenz 1 | Referenz 2 | Beispiel 1 | Beispiel 2 | Beispiel 3 | Beispiel 4 | Beispiel 5 | Beispiel 6 |
|---|---|---|---|---|---|---|---|---|---|---|
| Gew.-Teile PA PACM12 | | | 100 | 0 | 90 | 80 | 70 | 60 | 50 | 80 |
| Gew.-Teile PA12 Typ 1 | | | 0 | 100 | 10 | 20 | 30 | 40 | 50 | |
| Gew.-Teile PA12 Typ 2 | | | | | | | | | | 20 |
| Zugversuch (50 mm/min) | ISO 527 | | | | | | | | | |
| Streckspannung | | MPa | 60,0 | 45 | 58,1 | 61,0 | 56,8 | 56,5 | 54,2 | 58,6 |
| Streckdehnung | | % | 8,3 | 5 | 6,5 | 7,2 | 6,6 | 6,3 | 5,8 | 7,0 |
| Bruchspannung | | MPa | 63,0 | 57 | 55,6 | 63,1 | 56,3 | 55,3 | 53,8 | 57,8 |
| Bruchdehnung | | % | 195 | 200 | 348 | 245 | 226 | 382 | 426 | 325 |
| Zug-Modul (1 mm/min) | | MPa | 1450 | 1400 | 1470 | 1460 | 1420 | 1470 | 1480 | 1450 |
| CHARPY-Schlagzähigkeit | ISO 179/1 eU | | | | | | | | | |
| -30 °C | | kJ/m² | N^{a)} | N^{a)} | N^{a)} | N^{a)} | N^{a)} | N^{a)} | N^{a)} | N^{a)} |
| CHARPY-Kerbschlagzähigkeit | ISO 179/1eA | | | | | | | | | |
| 23 °C | | kJ/m² | 11,7 C^{b)} | 5 C^{b)} | 6,7 C^{b)} | 9,3 C^{b)} | 7,9 C^{b)} | 6,9 C^{b)} | 4,8 C^{b)} | 8,5 C^{b)} |
| 0 °C | | | 11,4 C^{b)} | 5 C^{b)} | - | 10,2 C^{b)} | - | - | - | - |
| -30 °C | | | 11,2 C^{b)} | 5 C^{b)} | 7,7 C^{b)} | 11,2 C^{b)} | 9,6 C^{b)} | 8,6 C^{b)} | 7,6 C^{b)} | 9,6 C^{b)} |
| Transmission | ISO 13468-2 | % | 90,8 | opak | 90,8 | 91,2 | 91,2 | 91,3 | 91,0 | 91,3 |
| Haze | ASTM D 1003 | % | 1,3 | - | 1,3 | 1,3 | 1,6 | 1,4 | 0,8 | 1,5 |
| ^{a)} Kein Bruch; ^{b)} C = vollständiger Bruch, einschließlich Scharnierbruch | | | | | | | | | | |

## Patentansprüche

1. Geformter Gegenstand, hergestellt aus einer Mischung, die zu mindestens 50 Gew.-% aus einem Polyamidanteil besteht, der aus
a) 70 bis 95 Gew.-Teilen PA PACMX (mit X = 8 bis 12) sowie
b) 30 bis 5 Gew.-Teilen eines linearen aliphatischen Polyamids mit im Mittel 8 bis 12 C-Atomen in den Monomereinheiten besteht, wobei die Summe der Gew.-Teile 100 beträgt.

2. Geformter Gegenstand gemäß Anspruch 1, **dadurch gekennzeichnet, dass** das PA PACMX ein Polyamid aus Monomereinheiten ist, die sich von Bis-(4-aminocyclohexyl)-methan (PACM) und einer linearen Dicarbonsäure herleiten, welche ausgewählt ist aus der Gruppe Octandisäure, Nonandisäure, Decandisäure, Undecandisäure, Dodecandisäure.

3. Geformter Gegenstand gemäß einem der vorhergehenden Ansprüche, **dadurch gekennzeichnet, dass** das PA PACMX ausgehend von einem PACM hergestellt wurde, dessen Gehalt an trans, trans-Isomer 30 bis 70 % und bevorzugt 35 bis 65 % beträgt.

4. Geformter Gegenstand gemäß einem der vorhergehenden Ansprüche, **dadurch gekennzeichnet, dass** das PA PACMX eine Schmelzenthalpie, gemessen gemäß ISO 11357 beim 2. Aufheizen und einer Aufheiz- und Abkühlrate von 20 °C/min, von 5 bis 40 J/g und bevorzugt von 8 bis 35 J/g besitzt.

5. Geformter Gegenstand gemäß einem der vorhergehenden Ansprüche, **dadurch gekennzeichnet, dass** das PACMX eine Transmission von mindestens 85 % und einen Haze von kleiner als 3 % besitzt, beides gemäß ASTM D1003 an spritzgegossenen Prüfkörpern mit einer Dicke von 2 mm bestimmt.

6. Geformter Gegenstand gemäß einem der vorhergehenden Ansprüche, **dadurch gekennzeichnet, dass** das lineare aliphatische Polyamid der Komponente gemäß b) ausgewählt ist aus der Gruppe PA88, PA79, PA97, PA610, PA106, PA 89, PA98, PA611, PA116, PA512, PA99, PA810, PA108, PA612, PA126, PA910, PA109, PA811, PA118, PA613, PA136, PA514, PA10, PA1010, PA812, PA128, PA614, PA146, PA1011, PA813, PA138, PA516, PA11, PA1012, PA1210, PA913, PA139, PA814, PA148, PA616, PA1112, PA1211, PA1013, PA1310, PA914, PA149, PA815, PA617, PA518, PA12, PA1212, PA1113, PA1014, PA1410, PA816, PA618 und co-PA12/1012.

7. Geformter Gegenstand gemäß einem der vorhergehenden Ansprüche, **dadurch gekennzeichnet, dass** die Mischung aus dem Polyamidanteil sowie maximal 50 Gew.-% weiteren Bestandteilen besteht.

8. Geformter Gegenstand gemäß Anspruch 7, **dadurch gekennzeichnet, dass** die weiteren Bestandteile einen Verträglichkeitsvermittler für die Komponenten gemäß a) und b) enthalten.

9. Geformter Gegenstand gemäß Anspruch 8, **dadurch gekennzeichnet, dass** der Verträglichkeitsvermittler ein Polyamin-Polyamid-Pfropfcopolymer ist, das unter Verwendung folgender Monomere hergestellt werden kann:
a) 0,5 bis 25 Gew.-%, bezogen auf das Pfropfcopolymer, eines verzweigten Polyamins mit mindestens 4 Stickstoffatomen und einem zahlenmittleren Molekulargewicht Mn von mindestens 146 g/mol sowie
b) 99,5 bis 75 Gew.-%, bezogen auf das Pfropfcopolymer, polyamidbildende Monomere, ausgewählt aus Lactamen, ω-Aminocarbonsäuren und/oder äquimolaren Kombinationen von Diamin und Dicarbonsäure.

10. Geformter Gegenstand gemäß einem der vorhergehenden Ansprüche, **dadurch gekennzeichnet, dass** die Mischung nach Mischen in der Schmelze eine Transmission von mindestens 85 % und einen Haze von kleiner als 3 % besitzt, beides gemäß ASTM D1003 an spritzgegossenen Prüfkörpern mit einer Dicke von 2 mm bestimmt.

11. Geformter Gegenstand gemäß einem der vorhergehenden Ansprüche, **dadurch gekennzeichnet, dass** er ein Formteil, eine Folie, eine Borste oder eine Faser ist.

12. Geformter Gegenstand gemäß einem der Ansprüche 1 bis 10, **dadurch gekennzeichnet, dass** er ein Brillengestell oder ein Brillenglas ist.

13. Geformter Gegenstand gemäß einem der Ansprüche 1 bis 10, **dadurch gekennzeichnet, dass** er eine Komponente eines Sportschuhs ist.

## Claims

1. Moulded article produced from a mixture composed of at least 50% by weight of a polyamide fraction which is composed of
a) from 70 to 95 parts by weight of PA PACMX (where X = from 8 to 12), and also
b) from 30 to 5 parts by weight of a linear aliphatic polyamide having an average of from 8 to 12 C atoms in the monomer units,
where the sum of the parts by weight is 100.

2. Moulded article according to Claim 1, **characterized in that** the PA PACMX is a polyamide made of monomer units which derive from bis(4-aminocyclohexyl)methane (PACM) and from a linear dicarboxylic acid selected from the group of octanedioic acid, nonanedioic acid, decanedioic acid, undecanedioic acid, dodecanedioic acid.

3. Moulded article according to either of the preceding claims, **characterized in that** the PA PACMX has been produced by starting from a PACM having from 30 to 70% and preferably from 35 to 65% content of trans,trans-isomer.

4. Moulded article according to any of the preceding claims, **characterized in that** the enthalpy of fusion of the PA PACMX, measured in accordance with ISO 11357 in the 2nd heating procedure and with a heating and cooling rate of 20°C/min, is from 5 to 40 J/g and preferably from 8 to 35 J/g.

5. Moulded article according to any of the preceding claims, **characterized in that** the transmittance of the PACMX is at least 85% and its haze is less than 3%, both determined in accordance with ASTM D1003 on injection-moulded test specimens of thickness 2 mm.

6. Moulded article according to any of the preceding claims, **characterized in that** the linear aliphatic polyamide of the component according to b) is selected from the group of PA88, PA79, PA97, PA610, PA106, PA 89, PA98, PA611, PA116, PA512, PA99, PA810, PA108, PA612, PA126, PA910, PA109, PA811, PA118, PA613, PA136, PA514, PA10, PA1010, PA812, PA128, PA614, PA146, PA1011, PA813, PA138, PA516, PA11, PA1012, PA1210, PA913, PA139, PA814, PA148, PA616, PA1112, PA1211, PA1013, PA1310, PA914, PA149, PA815, PA617, PA518, PA12, PA1212, PA1113, PA1014, PA1410, PA816, PA618 and co-PA12/1012.

7. Moulded article according to any of the preceding claims, **characterized in that** the mixture is composed of the polyamide fraction and at most 50% by weight of other constituents.

8. Moulded article according to Claim 7, **characterized in that** the other constituents comprise a compatibilizer for the components according to a) and b) .

9. Moulded article according to Claim 8, **characterized in that** the compatibilizer is a polyamine-polyamide graft copolymer which can be produced with use of the following monomers:
a) from 0.5 to 25% by weight, based on the graft copolymer, of a branched polyamine having at least 4 nitrogen atoms and a number-average molar mass Mn of at least 146 g/mol and
b) from 99.5 to 75% by weight, based on the graft copolymer, of polyamide-forming monomers selected from lactams, ω-aminocarboxylic acids and/or equimolar combinations of diamine and dicarboxylic acid.

10. Moulded article according to any of the preceding claims, **characterized in that**, after mixing in the melt, the mixture's transmittance is at least 85% and its haze is less than 3%, both determined in accordance with ASTM D1003 on injection-moulded test specimens of thickness 2 mm.

11. Moulded article according to any of the preceding claims, **characterized in that** it is a moulding, a film, a bristle or a fibre.

12. Moulded article according to any of Claims 1 to 10, **characterized in that** it is a spectacle frame or a spectacle lens.

13. Moulded article according to any of Claims 1 to 10, **characterized in that** it is a component of a sports shoe.

## Revendications

1. Article façonné, fabriqué à partir d'un mélange qui est constitué par au moins 50 % en poids d'une fraction polyamide, qui est constituée par :
a) 70 à 95 parties en poids de PA PACMX (avec X = 8 à 12) et
b) 30 à 5 parties en poids d'un polyamide aliphatique linéaire contenant en moyenne 8 à 12 atomes C dans les unités monomères, la somme des parties en poids étant de 100.

2. Article façonné selon la revendication 1, **caractérisé en ce que** le PA PACMX est un polyamide constitué par des unités monomères qui sont dérivées de bis-(4-aminocyclohexyl)-méthane (PACM) et d'un acide dicarboxylique linéaire, qui est choisi dans le groupe constitué par l'acide octanedioïque, l'acide nonanedioïque, l'acide décanedioïque, l'acide undécanedioïque, l'acide dodécanedioïque.

3. Article façonné selon l'une quelconque des revendications précédentes, **caractérisé en ce que** le PA PACMX a été fabriqué à partir d'un PACM dont la teneur en isomère trans,trans est de 30 à 70 % et de préférence de 35 à 65 %.

4. Article façonné selon l'une quelconque des revendications précédentes, **caractérisé en ce que** le PA PACMX présente une enthalpie de fusion, mesurée selon ISO 11357 lors du 2^{e} chauffage et à un taux de chauffage et de refroidissement de 20 °C/minute, de 5 à 40 J/g et de préférence de 8 à 35 J/g.

5. Article façonné selon l'une quelconque des revendications précédentes, **caractérisé en ce que** le PACMX présente une transmission d'au moins 85 % et un trouble inférieur à 3 %, tous les deux déterminés selon ASTM D1003 sur des éprouvettes moulées par injection d'une épaisseur de 2 mm.

6. Article façonné selon l'une quelconque des revendications précédentes, **caractérisé en ce que** le polyamide aliphatique linéaire du composant selon b) est choisi dans le groupe constitué par PA88, PA79, PA97, PA610, PA106, PA89, PA98, PA611, PA116, PA512, PA99, PA810, PA108, PA612, PA126, PA910, PA109, PA811, PA118, PA613, PA136, PA514, PA10, PA1010, PA812, PA128, PA614, PA146, PA1011, PA813, PA138, PA516, PA11, PA1012, PA1210, PA913, PA139, PA814, PA148, PA616, PA1112, PA1211, PA1013, PA1310, PA914, PA149, PA815, PA617, PA518, PA12, PA1212, PA1113, PA1014, PA1410, PA816, PA618 et co-PA12/1012.

7. Article façonné selon l'une quelconque des revendications précédentes, **caractérisé en ce que** le mélange est constitué par la fraction polyamide et au plus 50 % en poids d'autres constituants.

8. Article façonné selon la revendication 7, **caractérisé en ce que** les autres constituants contiennent un agent de compatibilisation pour les composants selon a) et b).

9. Article façonné selon la revendication 8, **caractérisé en ce que** l'agent de compatibilisation est un copolymère greffé polyamine-polyamide, qui peut être fabriqué en utilisant les monomères suivants :
a) 0,5 à 25 % en poids, par rapport au copolymère greffé, d'une polyamine ramifiée contenant au moins 4 atomes d'azote et ayant un poids moléculaire moyen en nombre Mₙ d'au moins 146 g/mol, et
b) 99,5 à 75 % en poids, par rapport au copolymère greffé, de monomères formant des polyamides, choisis parmi les lactames, les acides ω-aminocarboxyliques et/ou les combinaisons équimolaires d'une diamine et d'un acide dicarboxylique.

10. Article façonné selon l'une quelconque des revendications précédentes, **caractérisé en ce que** le mélange présente après le mélange à l'état fondu une transmission d'au moins 85 % et un trouble inférieur à 3 %, tous les deux déterminés selon ASTM D1003 sur des éprouvettes moulées par injection d'une épaisseur de 2 mm.

11. Article façonné selon l'une quelconque des revendications précédentes, **caractérisé en ce qu'**il s'agit d'une pièce moulée, d'un film, d'un poil ou d'une fibre.

12. Article façonné selon l'une quelconque des revendications 1 à 10, **caractérisé en ce qu'**il s'agit d'une monture de lunettes ou d'un verre de lunettes.

13. Article façonné selon l'une quelconque des revendications 1 à 10, **caractérisé en ce qu'**il s'agit d'un composant d'une chaussure de sport.
